# EUROPEAN PATENT SPECIFICATION

(11) **EP 1 859 193 B1**
(45) Date of publication and mention of the grant of the patent: **15.12.2010**
(21) Application number: 06711092.4
(22) Date of filing: 14.03.2006
(51) Int. Cl.: F16L 37/252

(54) **MANIFOLD FOR FLUIDS**
VERTEILER FÜR FLÜSSIGKEITEN
COLLECTEUR POUR FLUIDES

(30) Priority: 15.03.2005 IT TO20050035 U
(43) Date of publication of application: 28.11.2007
(73) Proprietor: Ferrero Rubinetterie s.r.l., 12060 Farigliano (CN) (IT)
(72) Inventor: FERRERO, Riccardo, I-12060 Farigliano (IT)
(74) Representative: Robba, Pierpaolo
(86) International application number: PCT/IB2006/050787
(87) International publication number: WO 2006/097892

(56) References cited:
- EP-A2- 1 045 209
- EP-A2- 1 321 698
- WO-A-01/71236
- WO-A-99/01701
- CH-A5- 694 438

## Description

### Field of the Art

The present invention relates to a manifold for fluids comprising at least a quick action coupling suitable for being connected to other manifolds, pipe fittings, pipings and hydraulic devices in general for supplying fluids.

In particular, the present invention relates to manifolds comprising interlocking quick couplings suitable for allowing various fluids to be supplied such as water, oil, compressed air or the like, in houses or industrial structures.

In the present description the term manifold is used as referring to devices for supplying fluids comprising a main inlet and a main outlet (inlet gate and outlet gate), of course reversible one with the other, and one or more side outlets (offtakes), generally having smaller dimensions, for allowing either the flow the fluid or controlling parameters of the fluid (temperature, capacity, etc).

Such kinds of manifolds are generally used for supplying fluids in residential environments.

As an example, in the case of building heating systems, such manifolds are used for receiving a warm water piping at their main inlet coming from the boiler and for supplying the water to a plurality of heating bodies (radiating panels or heaters, pipes, etc) through the offtakes of the building.

Normally the manifolds are connected one to another at their outlet so as to allow water to be supplied at a plurality of offtakes.

Such manifolds can also be used, as an example, for supplying sanitary water or compressed air and/or various fluids.

### Background art

Quick action couplings and manifolds provided with quick action couplings are known in the art.

For instance, an example of manifold is known from the patent document published with the number WO01/71236 provided with a quick action coupling of interlocking kind in which a male element (male) and a corresponding female element (female) are provided, at the main inlet and at the main outlet (outlet), suitable for being connected or coupled by interlocking with other manifolds or hydraulic devices, by means of a quick coupling. The male and the female are provided with respective protrusions or projections consisting of two annular segments suitable for being coupled with interlocking by inserting the male in the female and by rotating thereafter one of the elements relative to the other by approximately 90°.

According to the background art, the protrusions are at sight (visible) in order to allowing an operator to easily recognise the correct mutual connection easy, as an example, of many manifolds.

A problem of the cited background art is that the protrusions, protruding from the outline of the coupling, can be hit and damaged before and during the assembly.

Moreover, after assembly the protrusions, in particular the protrusion of the female, always since they protrude from the outline of the coupling, as an example can be broken or damaged due to accidental hits and also be uncoupled of disconnected from the coupling.

An example of spraying head with associated a quick action coupling is also known from the patent document published with the number WO 97/33698.

The coupling, particularly complex, comprises a male and a female suitable for being coupled each with the other by interlocking.

In this case, the male and the female -the latter being protected by a guard- comprise respective helic-shaped fins. By rotating one or the fins relative to the other two gaskets - an inner one and an outer one, both provided on the coupling- are compressed, and a liquid-tight connection is obtained by compressing the gaskets in an axial direction relative to the coupling.

The rotation of one of the fins relative to the other is controlled with a mechanical stop arranged inside the fin of the female.

A first problem of this kind of couplings is that the relative rotation of the male relative to the female is controlled by means of the mechanical stop in the female, the female being protected by the guard, and therefore the possible dirt on the mechanical stop can prevent the coupling from being completely closed.

A further problem of this kind of couplings is that it is particularly complex and therefore can be made -as set forth in the document- only of plastic material by moulding. In fact this kind of coupling has such complex structural features that manufacturing it made of metal would not be worth to be considered.

EP 1045209 discloses a distributor for fluids having several interconnected housings for containing valves, flow-meter, thermal sensors especially. The housings have an axially continuous main duct and at least one transverse duct connected to the main duct. A male extension to the main duct is inserted to a female part of the main duct of the adjoining housing. The male extension has at least one radially projecting lug which is part of a bayonet fastening and which cooperates with corresponding cavities in the inner wall of the female part having sections running in an axial and peripheral direction.

More in detail, EP 1 045 209 discloses the following features cited in the appended claim 1, namely a manifold for fluids comprising a main inlet and a main outlet for a fluid, and at least one offtake for supplying said fluid or checking features of said fluid, comprising at least one quick coupling female element associated to said main outlet and suitable for being coupled during use with a corresponding quick coupling male element so as to provide a quick action coupling; said manifold comprising a quick coupling male element associated to said main inlet, and suitable for being coupled during use with a corresponding quick coupling female element so as to provide a quick action coupling; said at least a quick coupling female element comprising a protecting shell having a depth equal or greater than the length of said quick coupling male element and substantially an annular shape, and being arranged so as to protect during use said corresponding quick coupling male element; said manifold comprising at least a coupling reference visible from the outside and suitable for allowing the carrying out of said quick action coupling to be visually checked; the male element further comprising a pair of annular male segments and a ring-like male recess, suitable for cooperating with a corresponding pair of annular female segments and a corresponding female recess; the couples of male segments and female segments being arranged so as to have a symmetry axis aligned with a first offtake so as to be positioned in relative identical positions relative to said first offtake; whereby two of said manifolds can be coupled by applying a substantially axial force suitable for allowing the male of the first manifold to be fitted in the female of the second manifold and by rotating one of the two manifolds in a direction, so as to align the first offtake of the first manifold with the first offtake of the second manifold.

CH 694438 discloses a pipe coupling locking device comprising a locking piece in the form of a tubular segment, which fits into one of the intermediate spaces defined by inner and outer cams of the interfitting pipe sections of the assembled pipe coupling.

In the above prior arrangements the segments provided on the female joint are placed at the entrance of the joint and although being visible from the outside they can be used as reference suitable for the correct coupling of the male and female joints they are however much exposed to the risk of damages.

Another type of manifold which is made of plastic parts and can be joined to a similar manifold without rotation is disclosed in WO 9901701. According to this arrangement a notch is provided in an internal rib in the male connector end sized to engage a locking tab carried by the female connector end so that two similar manifold segments could be inserted together and thereby joined without rotation.

Summing up, the Applicant observes that known quick couplings
- in a first case are provided with protrusions that make them not reliable enough or subject to damages; and
- in a second case, when the protrusions are protected with a guard, are provided with not visible mechanical stops that not allow checking the complete closing of the coupling.

### Summary of the Invention

An object of the present invention is solving the problems of the background art previously set forth.

According to the present invention, this object is achieved by means of a manifold for fluids having the features according to claim 1.

According to a more preferred embodiment at least a of the manifold offtakes is positioned so as to indicate the perfect closing of the coupling.

According to a further feature of the present invention, the manifold can be made of metallic material and manufactured by casting and turning.

### List of Figures

This and other features of the present invention will appear clearer from the following description of a preferred non-limiting embodiment, set forth with reference to the enclosed schematic figures, wherein:
Figure 1 shows a perspective view of a manifold for fluids according to the invention;
Figure 2 shows a longitudinal cross-section view of the manifold of Figure 1;
Figures 3a, 3b show cross-section views according to the cross-section planes B-B and C-C of Figure 2; and
Figure 4 shows a longitudinal cross-section view of a couple of manifolds according to the invention, coupled together.

### Detailed Description

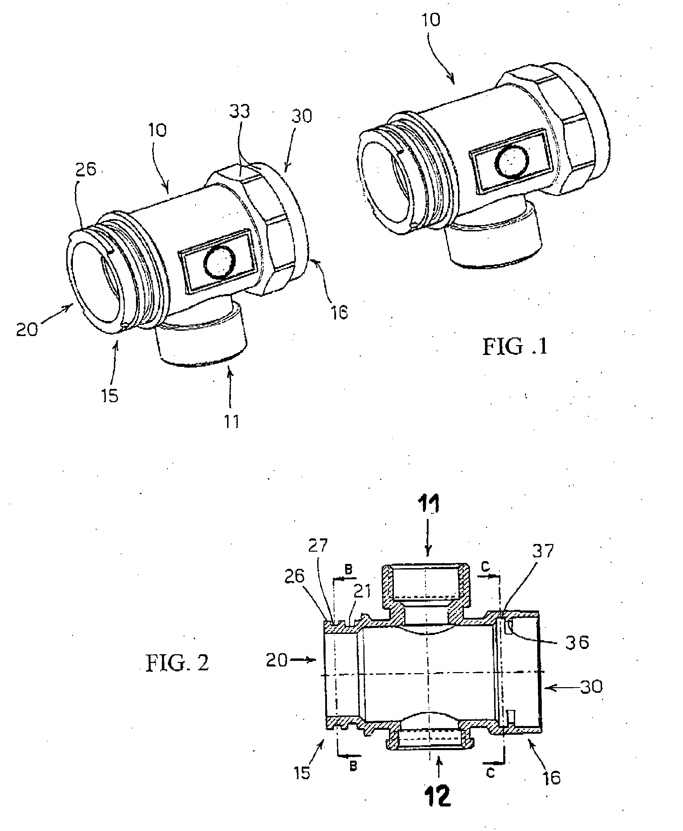

Referring to Figure 1, a manifold for fluids (manifold) 10 according to the invention comprises as an example:
- a quick coupling male element (male element or male) 15 having a predetermined length and associated to a main inlet 20; and
- a quick coupling female element (female element or female) 16 associated to a main outlet 30 of the manifold, preferably, coaxial with the main inlet 20. The male element 15 of a first 10 manifold or hydraulic device and the female element 16 of a second manifold or hydraulic device, when coupled, are suitable for providing a quick action coupling.

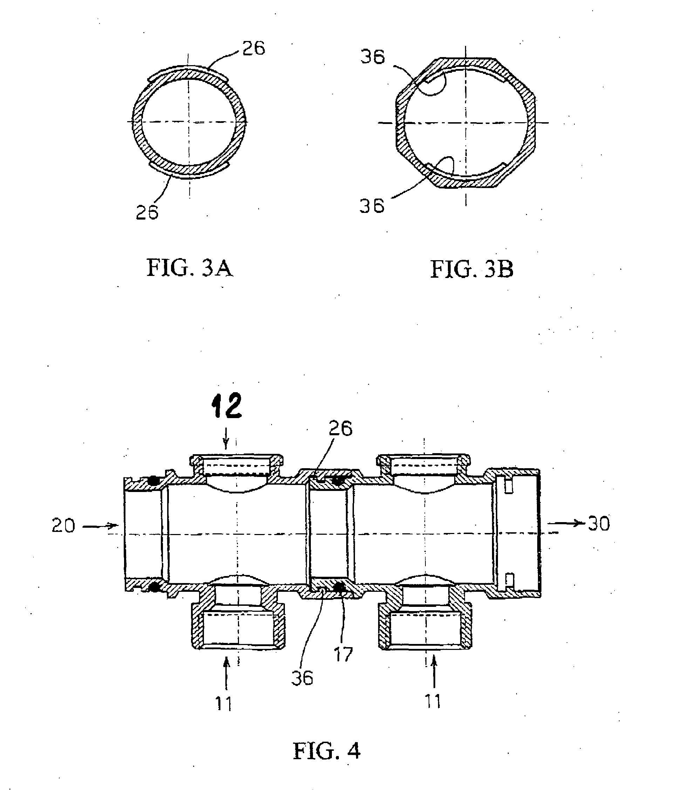

Moreover in the preferred embodiment the manifold 10 comprises a first offtake 11 for supplying fluids and, in alternative embodiments, as an example, a second offtake 12 like shown in Figures 2 and 4 or further offtakes.

In the preferred embodiment, the first and second offtake, 11 and 12, are provided with threads of known kind so as to allow themselves to be connected, in a known way, with corresponding threads as an example of pipes or pipe fittings. However such offtakes can also being provided with quick action coupling elements according to the present invention.

In the preferred embodiment the male element 15 comprises a seal seat 21 (Figures 1 to 4), as an example having rectangular shape, and arranged so as to house a toroidal gasket (gasket) 17. The gasket, as described in further detail hereinafter, is suitable for providing, in known way, a fluid-tight coupling.

In the invention the male element 15 further comprises a pair of annular male segments (fins of the male) 26 and a ring-like male recess (male recess) 27, as an example having rectangular cross-section, suitable for cooperating in known way with a corresponding pair of annular female segments (fins of the female) 36 and a corresponding ring-like female recess (female recess) 37 so as to realize the coupling according to the invention.

The couples of fins, male 26 and female 36 respectively, as an example extend as a circle or radially and extend over a circular sector of about 90°; the couples of fins 26 and 36 respectively are suitable for being coupled together, as it will be describer hereinafter in further detail, through a rotation as an example of the male 15 relative to the female 16 by about 90°.

The recesses 27 and 37 respectively are suitable for housing, in a known way, the pairs of annular segments 36 and 26 respectively and, in the preferred embodiment, extend as an example, over the whole circumference and are not provided with any mechanical stop element.

The pairs of annular segments or fins, male 26 and female 36 respectively, are arranged so as to have a symmetry axis aligned with the first offtake 11. Like shown in the example of Figure 3a, the pairs of fins can be arranged symmetrically relative to the vertical axis.

In general the pairs of annular segments or fins are made so as to be positioned in relative identical positions relative to the first 11 or to the second offtake 12 respectively, or to at least one of the offtakes.

This kind of configuration, as it will be described in detail hereinafter, is such to allow the male 15 and the female 16 to be completely coupled using the first 11 or the second offtake 12 of the manifold 10 as coupling reference, with no need of mechanical stop elements inside the manifold or of shaping the elements of the coupling as protrusions.

Of course in other embodiments the coupling reference can be associated to suitable indications provided on the manifold or on the element to be connected to the manifold, and however arranged so as to keep a predetermined relation with the pair of fins, male 26 and female 36 respectively, instead of being associated to one of the offtakes.

In the invention the female element 16 comprises a protection shell (shell) 33 substantially shaped as an outer circular ring and suitable for protecting the male element 15 during use.

In the invention the shell 33 has a depth equal to or greater than the length of the male 15 and inside is shaped so as to comprise, starting from the inner part, the female recess 37, the pair of female fins 36 and a substantially flat surface (inner surface of the shell) extending towards the outside of the main outlet 30.

In the preferred embodiment the shell 33 is externally shaped with a substantially hexagonal cross-section, but any other alternative shape, compatible with the function of protecting external shell, can also be used.

The process for assembling or connecting the manifold 10 with an equivalent manifold, that is herein taken as reference example, or with pipe fittings, pipings or hydraulic devices comprising quick action coupling elements as described, is the following.

After having aligned the two manifolds 10 comprising, as an example, one or two offtakes, so that the first offtake 11 of a first manifold 10 is oriented at an angle of 90° relative to the first offtake 11 of a second manifold 10, the connection procedure provides for a substantially axial force along the outlet axis 20, 30 to be applied, such force being suitable for allowing the male 15 of the first manifold 10 to be fitted in the female 16 of the second manifold.

During the fitting phase the gasket 17 is suitable for applying a substantially radial pressure relative to the longitudinal axis of the manifolds on the inner surface of the shell 33.

When the fitting phase is over, one of the two manifolds is rotated in a whichever direction, so as to align the first offtake 11 of the first manifold with the first offtake 11 of the second manifold.

After this rotation phase, the connection of the two manifolds is terminated so that the pairs of annular segments, the male 26 and the female 36 respectively, are suitable for ensuring a fluid-tight axial sealing and the gasket 17 is suitable for ensuring the radial fluid-tight sealing of the coupling so obtained.

Of course the alignment in the fitting- and coupling phase can be carried out using suitable indications provided on the manifold and on the hydraulic device to be coupled, instead of the offtakes.

For disassembling the coupling it will be sufficient, as a technician skilled in the field can easily understand, to rotate, in a whichever direction, one of the two manifolds so as to direct the first offtake 11 of the first manifold 10 at an angle of 90° relative to the first offtake 11 of the second manifold 10 and to apply an axial force so as to in such axial sense to space the manifolds.

The coupling so obtained provides the advantage that is fully protected by the guard 33 so that no body can hit the coupling elements and cause damages or the coupling itself to be accidentally disassembled. Moreover the pipes or hydraulic devices connected to the offtakes will keep the position stable.

Advantageously, the coupling does not require any mechanical stop element associated to the coupling elements, since the completion of the connection can be checked visually from the outside and therefore the coupling is not subject to assembly errors. Advantageously, the described manifold has a very simple manufacture. In fact such manifold requires, as a technician skilled in the technical field can easily understand, simple mechanical workings, such as making recesses (grooves) on the male element and on the female element.

The manifold can therefore be made of metallic material, such as brass, aluminum and, for diameters greater as an example than 50 millimeters, also of steel, through forming or forging or casting and finish by turning thereafter.

Of course the manifold can also be made of plastic material by molding.

Summarizing, in the Applicant's opinion the previously described quick coupling manifold, even if it has a simple structure is arranged so as to allow both the coupling to be protected with a guard and the complete closing of the coupling to be recognised from the outside.

The manifold has been described with coupling male elements comprising toroidal sealing gaskets but, in other embodiments, such gaskets can be replaced with toroidal lobed-gaskets or lip seals, known per se.

## Claims

1. Manifold for fluids comprising a main inlet (20) and a main outlet (30) for a fluid, and at least one offtake (11) for supplying said fluid or checking features of said fluid, comprising a quick coupling female element (16) associated to said main outlet (30) and suitable for being coupled during use with a corresponding quick coupling male element (15) so as to provide a quick action coupling;
said manifold comprising a quick coupling male element (15) associated to said main inlet (20), and suitable for being coupled during use with a corresponding quick coupling female (16) element so as to provide a quick action coupling;
said quick coupling female element (16) comprising a protecting shell (33) having a depth equal or greater than the length of said quick coupling male element (15) and substantially an annular shape, and being arranged so as to protect during use said corresponding quick coupling male element (15);
said manifold comprising at least a coupling reference visible from the outside and suitable for allowing the carrying out of said quick action coupling to be visually checked;
the male element (15) further comprising a pair of annular male segments (26) and a ring-like male recess (27), suitable for cooperating with a corresponding pair of annular female segments (36) and a corresponding ring-like female recess (37);
said protecting shell (33) inside being shaped so as to comprise, starting from the inner part, the female recess (37), the pair of female segments (36) and a substantially flat inner surface of the shell (33) extending towards the outside of the main outlet (30);
the couples of male segments (26) and female segments (36) extending as a circle or radially over a circular sector of about 90° and being arranged so as to have a symmetry axis aligned with a first offtake (11) so as to be positioned in relative identical positions relative to said first offtake (11);
whereby two of said manifolds (10) can be coupled by orienting one offtake (11) of a first manifold (10) at an angle of 90° relative to a first offtake (11) of a second manifold (10), by applying a substantially axial force suitable for allowing the male (15) of the first manifold (10) to be fitted in the female (16) of the second manifold (10) and by rotating one of the two manifolds in a whichever direction, so as to align the first offtake (11) of the first manifold with the first offtake (11) of the second manifold.

2. Manifold according to claim 1, wherein a threaded element of a coupling is associated to at least an offtake (11).

3. Manifold according to claim 1, wherein said at least an offtake (11) can be arranged like said at least a coupling reference visible from the outside.

4. Manifold according to claim 1, wherein said quick coupling male element (15) comprises a further circular recess (21) suitable for housing a sealing gasket.

5. Manifold according to claim 1, **characterised by** being made of metallic material.

6. Manifold according to claim 5, **characterised by** being made by forming or forging or casting and mechanical finish thereafter.

## Patentansprüche

1. Verteiler für Flüssigkeiten, umfassend einen Haupteinlass (20) und einen Hauptauslass (30) für eine Flüssigkeit, und zumindest eine Ableitung (11) zum Zuführen der Flüssigkeit oder zum Prüfen von Merkmale der Flüssigkeit, umfassend ein weibliches Schnellkupplungselement (16), das dem Hauptauslass (30) zugeordnet ist und zum Kuppeln im Gebrauch an ein entsprechendes männliches Schnellkupplungselement (15) zum Vorsehen einer Schnellkupplung geeignet ist;
wobei der Verteiler ein männliches Schnellkupplungselement (15) umfasst, das dem Haupteinlass (20) zugeordnet ist und zum Kuppeln im Gebrauch an ein entsprechendes weibliches Schnellkupplungselement (16) zum Vorsehen einer Schnellkupplung geeignet ist;
wobei das weibliche Schnellkupplungselement (16) eine Schutzummantelung (33) umfasst, die eine Tiefe gleich der oder größer als die Länge des männlichen Schnellkupplungselements (15) und im Wesentlichen eine ringförmige Form aufweist und zum Schützen des entsprechenden männlichen Schnellkupplungselements (15) im Gebrauch angeordnet ist;
wobei der Verteiler zumindest eine Kupplungsreferenz umfasst, die von außen sichtbar ist und ermöglicht, dass das Ausführen der Schnellkupplung visuell überprüft wird;
wobei das männliche Element (15) ferner ein Paar ringförmiger männliche Segmente (26) und eine ringartige männliche Aussparung (27) umfasst, die zum Zusammenwirken mit einem entsprechenden Paar ringförmiger weiblicher Segmente (36) und einer ringartigen weiblichen Aussparung (37) geeignet sind;
wobei die Schutzummantelung (33) innen derart geformt ist, dass sie, vom Innenteil beginnend, die weibliche Aussparung (37), das Paar weiblicher Segmente (36) und eine im Wesentlichen flache Innenfläche der Ummantelung (33) umfasst, die zur Außenseite des Hauptauslasses (30) hin verläuft;
wobei die Paare männlicher Segmente (26) und weiblicher Segmente (36) als Kreis oder radial über einen Kreisquerschnitt von ungefähr 90° verlaufen und derart angeordnet sind, dass sie eine Symmetrieachse aufweisen, die an einer ersten Ableitung (11) zur Positionierung in verhältnismäßig identischen Positionen bezüglich der ersten Ableitung (11) augerichtet ist;
wobei zwei der Verteiler (10) durch Ausrichten einer Ableitung (11) eines ersten Verteilers (10) in einem Winkel von 90° bezüglich einer ersten Ableitung (11) eines zweiten Verteilers (10), durch Ausüben einer im Wesentlichen axialen Kraft, die geeignet ist zu ermöglichen, dass das männliche Element (15) des ersten Verteilers (10) in dem weiblichen Element (16) eingefügt wird, und durch Drehen eines der zwei Verteiler in eine beliebige Richtung Icuppelbar sind, um die erste Ableitung (11) des ersten Verteilers an der ersten Ableitung (11) des zweiten Verteilers auszurichten.

2. Verteiler nach Anspruch 1, wobei ein gewindetes Element einer Kupplung zumindest einer Ableitung (11) zugeordnet ist.

3. Verteiler nach Anspruch 1, wobei die zumindest eine Ableitung (11) wie die zumindest eine Kupplungsreferenz angeordnet sein kann, die von außen sichtbar ist.

4. Verteiler nach Anspruch 1, wobei das männliche Schnellkupplungselement (15) ferner eine kreisförmige Aussparung (21) umfasst, die zum Unterbringen einer Dichtung geeignet ist.

5. Verteiler nach Anspruch 1, **dadurch gekennzeichnet, dass** er aus Metallmaterial hergestellt ist.

6. Verteiler nach Anspruch 5, **dadurch gekennzeichnet, dass** er durch Formen oder Schmieden oder Gießen und anschließende mechanische Endbearbeitung hergestellt ist.

## Revendications

1. Collecteur pour fluides comprenant un orifice d'entrée principal (20) et un orifice de sortie principal (30) destinés à un fluide, et au moins un soutirage (11) pour fournir dudit fluide ou pour vérifier des caractéristiques dudit fluide, comportant un élément femelle de couplage rapide (16) associé audit orifice de sortie principal (30) et approprié pour être couplé lors de l'utilisation avec un élément mâle de couplage rapide correspondant (15) de façon à fournir un couplage à action rapide ;
ledit collecteur comprenant un élément mâle de couplage rapide (15) associé au dit orifice d'entrée principal (20), et approprié pour être couplé lors de l'utilisation avec un élément femelle de couplage rapide correspondant (16) de façon à fournir un couplage à action rapide ;
ledit élément femelle de couplage rapide (16) comportant une enveloppe de protection (33) présentant une profondeur égale ou supérieure à la longueur dudit élément mâle de couplage rapide (15) et essentiellement une configuration annulaire, et étant agencé de façon à protéger lors de l'utilisation ledit élément mâle de couplage rapide correspondant (15) ;
ledit collecteur comprenant au moins une référence de couplage visible de l'extérieur et appropriée pour permettre de contrôler visuellement la réalisation dudit couplage à action rapide ;
l'élément mâle (15) comprenant, de plus, une paire de segments annulaires mâles (26) et un évidement mâle en forme d'anneau (27), appropriés pour coopérer avec une paire correspondante de segments annulaires femelles (36) et avec un évidement femelle en forme d'anneau correspondant (37) ;
ladite enveloppe de protection (33) étant configurée à l'intérieur de façon à comprendre, démarrant à partir de la partie intérieure, l'évidement femelle (37), la paire de segments femelles (36) et une surface interne essentiellement lisse de l'enveloppe (33) s'étendant vers l'extérieur de l'orifice de sortie principal (30) ;
les couples de segments mâles (26) et de segments femelles (36) s'étendant sous la forme d'un cercle ou de façon radiale sur un secteur circulaire d'environ 90° et étant agencés de façon à comporter un axe de symétrie aligné avec un premier soutirage (11) de façon à être positionnés dans des positions relatives identiques par rapport au dit premier soutirage (11) ;
de sorte que deux desdits collecteurs (10) peuvent être couplés en orientant un soutirage (11) d'un premier collecteur (10) suivant un angle de 90° par rapport à un premier soutirage (11) d'un second collecteur (10), en appliquant une force essentiellement axiale appropriée pour permettre à l'élément mâle (15) du premier collecteur (10) de s'ajuster dans l'élément femelle (16) du second collecteur (10) et en faisant tourner l'un des deux collecteurs dans une direction quelconque, de façon à aligner le premier soutirage (11) du premier collecteur avec le premier soutirage (11) du second collecteur.

2. Collecteur suivant la revendication 1, dans lequel un élément fileté d'un couplage est associé à au moins un soutirage (11).

3. Collecteur selon la revendication 1, dans lequel ledit au moins un soutirage (11) peut être agencé comme étant ladite au moins une référence de couplage visible de l'extérieur.

4. Collecteur selon la revendication 1, dans lequel ledit élément mâle de couplage rapide (15) comporte un autre évidement circulaire (21) approprié pour loger un joint d'étanchéité.

5. Collecteur selon la revendication 1, **caractérisé par** le fait d'être constitué d'un matériau métallique.

6. Collecteur selon la revendication 5, **caractérisé par** le fait d'être réalisé par formage ou par forgeage ou par moulage et ensuite par finition mécanique.
